# EUROPÄISCHE PATENTANMELDUNG

(11) **EP 3 590 797 A1**
(43) Veröffentlichungstag der Anmeldung: **08.01.2020**
(21) Anmeldenummer: 18182216.4
(22) Anmeldetag: 06.07.2018
(51) Int. Cl.: B62D 33/04, B62D 27/02, B62D 31/02, B62D 25/20

(54) **KOFFERAUFBAU MIT EINER MIT EINER BODENSTRUKTUR VERBUNDENEN WAND**

(71) Anmelder: Schmitz Cargobull AG, 48341 Altenberge (DE)
(72) Erfinder: Beelmann, Reinhard, 45721 Haltern am See (DE)
(74) Vertreter: Cohausz & Florack

(57) **Zusammenfassung**

Beschrieben und dargestellt ist ein Kofferaufbau (2) eines Nutzfahrzeugs (1), insbesondere Lastkraftwagen, Anhänger oder Sattelauflieger, mit wenigstens einer den Laderaum (8) des Kofferaufbaus (2) begrenzenden Wand (4,5) und einer den Ladeboden (9) tragenden Bodenstruktur (10), wobei ein unterer Rand (15) der Wand mit einem äußeren Rand (37) der Bodenstruktur (10) fest verbunden ist, wobei der untere Rand (15) der wenigstens einen Wand (4,5) und der äußere Rand (37) der Bodenstruktur (10) jeweils eine Montageleiste (38,39) zum Montieren der Wand (4,5) an der Bodenstruktur (10) aufweisen und wobei die Montageleisten (38,39) der wenigstens einen Wand (4,5) und der Bodenstruktur (10) korrespondierende und aneinander anliegende Anlageflächen (40,41) aufweisen. Damit eine zuverlässige, stabile, langlebige und leichte Verbindung zwischen wenigstens einer Wand und der Bodenstruktur schnell, einfach und kostengünstig bereitgestellt werden kann, ist vorgesehen, dass die wenigstens eine Anlagefläche (40) der Montageleiste (38) der Wand (4,5) sich schräg nach unten in Richtung der Bodenstruktur (10) erstreckt und in einer Richtung wenigstens im Wesentlichen senkrecht zur Bodenstruktur (10) von der sich schräg nach oben in Richtung der wenigstens einen Wand (4,5) erstreckenden wenigstens einen Anlagefläche (41) der Montageleiste (39) der Bodenstruktur (10) formschlüssig unterfangen ist.

## Beschreibung

Die Erfindung betrifft einen Kofferaufbau eines Nutzfahrzeugs, insbesondere Lastkraftwagen, Anhänger oder Sattelauflieger, mit wenigstens einer den Laderaum des Kofferaufbaus begrenzenden Wand und einer den Ladeboden tragenden Bodenstruktur, wobei ein unterer Rand der Wand mit einem äußeren Rand der Bodenstruktur fest verbunden ist, wobei der untere Rand der wenigstens einen Wand und der äußere Rand der Bodenstruktur jeweils eine Montageleiste zum Montieren der Wand an der Bodenstruktur aufweisen und wobei die Montageleisten der wenigstens einen Wand und der Bodenstruktur korrespondierende und aneinander anliegende Anlageflächen aufweisen. Ferner betrifft die Erfindung ein Verfahren zur Herstellung eines solchen Kofferaufbaus.

Nutzfahrzeuge, beispielsweise in Form von Lastkraftwagen, Anhängern oder Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Wandelemente auf, die eine äußere, strukturgebende Decklage und eine innere, strukturgebende Decklage sowie eine dazwischen vorgesehene Kernlage umfassen, welche typischerweise aus einem geschäumten Kunststoff gebildet wird. Dabei können die innere Decklage und/oder die äußere Decklage selbst bedarfsweise mehrlagig aufgebaut sein. Durch die hohe termische Isolationswirkung der Kernlage sind entsprechende zweischalige Wandelemente insbesondere für den Kühltransport, also den Transport temperaturempfindlicher Güter geeignet. Kofferaufbauten können in einigen Fällen aber auch einschalig aufgebaut sein, wenn es auf eine thermische Isolation durch den Kofferaufbau nicht ankommt. Dann ist bei dem entsprechenden Wandelement lediglich eine strukturgebende Decklage auf der Außenseite des Wandelements vorgesehen. Auf der dem Laderaum zugewandten Seite des einschaligen Wandelements können zur Aussteifung zudem Rahmen oder Gitterstrukturen vorgesehen sein. Unabhängig davon können die Decklagen der Wandpaneele grundsätzlich wenigstens im Wesentlichen aus einem glasfaserverstärkten Kunststoff, Stahl oder Aluminium bestehen, sowie bedarfsweise lackiert sein.

Wenigstens eine Wand des Kofferaufbaus ist mit einer den Ladeboden des Laderaums tragenden Bodenstruktur verbunden, wobei der untere Rand der Wand mit dem äußeren Rand der Bodenstruktur gefügt ist. Für das Verbinden des unteren Rands der wenigstens einen Wand mit der Bodenstruktur kommen unterschiedliche Verbindungen in Frage. Beispielsweise können der untere Rand der Wand und der äußere Rand der Bodenstruktur korrespondierende Montageleisten aufweisen, die miteinander verbunden werden und/oder die Wand in der gewünschten Position zur Bodenstruktur fixieren. Dazu bilden die Montageleisten insbesondere korrespondierende Anlageflächen, an denen die Wand und die Bodenstruktur im verbundenen Zustand aneinander anliegen.

Die Verbindung zwischen den Wänden des Kofferaufbaus mit der zugehörigen Bodenstruktur soll sehr stabil und langlebig sein. Mithin sollte die Verbindung in der Lage sein, sehr hohe Kräfte von den Wänden auf die Bodenstruktur zu übertragen, und zwar unabhängig davon, ob die Kräfte von der Außenseite des Kofferaufbaus oder vom Laderaum aus in die Wände eingeleitet werden. Zugleich soll der Kofferaufbau aber insgesamt möglichst leicht und kostengünstig sein. Zudem sollen sich die Wände des Kofferaufbaus einfach und schnell mit der Bodenstruktur verbinden lassen, um eine kostengünstige Fertigung des Kofferaufbaus sicherstellen zu können. Obwohl die Wände der bekannten Kofferaufbauten auf sehr unterschiedliche Weisen mit den zugehörigen Bodenstrukturen verbunden sind, werden jeweils nur einige der vorstehenden Anforderungen zufriedenstellend erfüllt, was regelmäßig zulasten anderer Anforderungen geht. Mithin besteht hier weiterer Optimierungsbedarf.

Daher liegt der vorliegenden Erfindung die Aufgabe zugrunde, den Kofferaufbau und das Verfahren jeweils der eingangs genannten und zuvor näher beschriebenen Art derart auszugestalten und weiterzubilden, dass eine zuverlässige, stabile, langlebige und leichte Verbindung zwischen wenigstens einer Wand und der Bodenstruktur schnell, einfach und kostengünstig bereitgestellt werden kann.

Diese Aufgabe ist bei einem Kofferaufbau nach dem Oberbegriff des Anspruchs 1 dadurch gelöst, dass die wenigstens eine Anlagefläche der Montageleiste der Wand sich schräg nach unten in Richtung der Bodenstruktur erstreckt und in einer Richtung wenigstens im Wesentlichen senkrecht zur Bodenstruktur von der sich schräg nach oben in Richtung der wenigstens einen Wand erstreckenden wenigstens einen Anlagefläche der Montageleiste der Bodenstruktur formschlüssig unterfangen ist.

Die genannte Aufgabe ist ferner gemäß Anspruch 14 gelöst durch ein Verfahren zur Herstellung eines Kofferaufbaus nach einem der Ansprüche 1 bis 13, bei dem der untere Rand der wenigstens einen Wand an den seitlichen Rand der Bodenstruktur herangeführt wird, bei dem der untere Rand der wenigstens einen Wand mit der Montageleiste auf die Montageleiste der Bodenstruktur aufgesetzt wird, bei dem die Anlagefläche der Montageleiste der wenigstens einen Wand entlang der Anlagefläche der Montageleiste der Bodenstruktur schräg nach unten in Richtung der Bodenstruktur abgleitet und bei dem die Montageleiste der wenigstens einen Wand mit der Montageleiste der Bodenstruktur verbunden, insbesondere verschraubt und/oder verklebt, wird.

Die Erfindung hat erkannt, dass sich das Fügen einer Wand einfacher und schneller realisieren lässt, wenn die wenigstens eine Anlagefläche der Montageleiste der wenigstens einen Wand ebenso wie die korrespondierende Anlagefläche der Montageleiste der Bodenstruktur schräg gestellt ist, und zwar vorzugsweise in einem wenigstens im Wesentlichen gleichen Winkel zur Horizontalen bzw. zur Oberseite des Ladebodens. Bei der Wand handelt es sich insbesondere um eine Stirnwand oder um eine Seitenwand des Kofferaufbaus, da bei diesen Wänden, die fertigungstechnischen Vorteile besonders zum Tragen kommen.

Durch die sich schräg nach unten in Richtung der Bodenstruktur bzw. nach innen erstreckende Anlagefläche der Montageleiste der wenigstens einen Wand und die sich schräg nach oben in Richtung der wenigstens einen Wand bzw. nach außen erstreckende wenigstens eine Anlagefläche der Montageleiste der Bodenstruktur finden sich die Wand und die Bodenstruktur in der richtigen Position zueinander, wenn die Wand auf die Bodenstruktur abgesetzt wird. Dann rutscht die Wand mit ihrer Anlagefläche an der korrespondierenden Anlagefläche der Bodenstruktur nach unten und in Richtung des Laderaums. Wenn die vorbestimmte Position der Wand in Bezug auf die Bodenstruktur erreicht ist, wird die Anlagefläche der Montageleiste der wenigstens einen Wand in der Schwerkraftrichtung bzw. in einer Richtung senkrecht zur Oberseite des Ladebodens formschlüssig von der Anlagefläche der Montageleiste der Bodenstruktur unterfangen und in der entsprechenden Position gestützt.

Infolge der schräg gestellten, korrespondierenden und aneinander anliegenden Anlageflächen der Montageleisten der Wand und der Bodenstruktur wird zudem ein Formschluss in einer Richtung parallel zur Oberseite des Ladebodens, senkrecht zur Wand und wegweisend vom Laderaum bereitgestellt. Dies führt zu einer stabileren und zuverlässigeren Verbindung zwischen der Wand und der Bodenstruktur. Auf diese Weise kann die Wand zuverlässig, stabil und langlebig durch eine leichte Verbindung montiert werden, und zwar gleichzeitig schnell, einfach und kostengünstig.

Die Montage der wenigstens einen Wand an der Bodenstruktur zur Fertigung eines Kofferaufbaus erfolgt unter Verwendung der entsprechenden und zuvor beschriebenen Verbindung vorzugsweise so, dass der untere Rand der wenigstens einen Wand zunächst an den seitlichen Rand der Bodenstruktur herangeführt wird. Wenn die Wand und die Bodenstruktur grob zueinander ausgerichtet sind, wird die Wand langsam abgelassen, wobei der untere Rand der wenigstens einen Wand schrittweise mit der Montageleiste auf die Montageleiste der Bodenstruktur aufgesetzt wird. Für den Fall, dass die Wand bei der groben Ausrichtung der Wand in Bezug auf die Bodenstruktur nicht bereits zufällig in dem richtigen seitlichen Abstand zur Bodenstruktur angeordnet worden ist, gleitet die Anlagefläche der Montageleiste der wenigstens einen Wand nach dem ersten Kontakt mit der korrespondierenden Anlagefläche der Bodenstruktur an der letztgenannten nach unten ab und bewegt sich dabei seitlich auf die Bodenstruktur zu. Diese Bewegung kommt zu einem Ende, wenn die Wand ihre vorbestimmte Position zur Bodenstruktur erreicht hat. Dann wird die Wand von der Bodenstruktur über die schrägen und korrespondierenden Anlageflächen der Wand und der Bodenstruktur sowohl senkrecht zum Ladeboden bzw. zur Bodenstruktur als auch senkrecht zur Wand, und zwar zur Außenseite des Kofferaufbaus formschlüssig in Position gehalten. Für eine dauerhafte und zuverlässige Verbindung wird die Montageleiste der wenigstens einen Wand anschließend mit der Montageleiste der Bodenstruktur verbunden. Dies kann einfach, kostengünstig und schnell erfolgen, wenn die Wand und die Bodenstruktur miteinander verschraubt und/oder verklebt werden.

Der besseren Verständlichkeit halber und zur Vermeidung unnötiger Wiederholungen werden nachfolgend der Kofferaufbau und das Verfahren zu seiner Herstellung gemeinsam beschrieben, ohne jeweils immer im Einzelnen zwischen dem Kofferaufbau und dem Verfahren zu unterscheiden. Für den Fachmann wird dennoch anhand des jeweiligen Kontextes ersichtlich, welche Merkmale jeweils in Bezug auf den Kofferaufbau und das Verfahren besonders bevorzugt sind.

Bei einer ersten besonders bevorzugten Ausgestaltung des Kofferaufbaus sind die Anlageflächen der wenigstens einen Wand und der Bodenstruktur, bedarfsweise auch die entsprechenden Montageleisten insgesamt, oberhalb eines unteren Endes der wenigstens einen Wand und/oder oberhalb eines unteren Endes der Bodenstruktur angeordnet. Auf diese Weise kann die Verbindung stabilisiert und die Ausrichtung von der Wand und der Bodenstruktur zueinander verbessert werden, nämlich beispielsweise dadurch, dass die Wand und die Bodenstruktur auch unterhalb der Anlageflächen bzw. Montageleisten aneinander abgleiten können. Besonders bevorzugt ist es zur Stabilisierung der Verbindung zwischen der wenigstens einen Wand und der Bodenstruktur, wenn die Wand und die Bodenstruktur im miteinander verbundenen Zustand, insbesondere seitlich, aneinander anliegen. Die Wand kann sich mithin entsprechend, insbesondere seitlich, an der Bodenstruktur abstützen.

Um die Verbindung möglichst zweckmäßig wenigstens im Wesentlichen entlang der gesamten Länge der wenigstens einen Wand entlang der zugehörigen Bodenstruktur bereitstellen zu können, bietet es sich an, die wenigstens eine Anlagefläche der Montageleiste der wenigstens einen Wand und/oder die wenigstens eine Anlagefläche der Montageleiste der Bodenstruktur wenigstens im Wesentlichen entlang der gesamtem Länge der Wand vorzusehen. Dabei können entlang der Verbindung zwischen der Wand und der Bodenstruktur grundsätzlich mehrere Anlageflächen der Wand und/oder der Bodenstruktur vorgesehen sein, und zwar insbesondere hintereinander und voneinander beabstandet. Auch auf diese Weise kann entlang der entsprechenden Wand insgesamt eine große Verbindungsfläche zwischen der Wand und der Bodenstruktur bereitgestellt werden. Besonders einfach und damit besonders bevorzugt ist es jedoch, wenn sich eine Anlagefläche der Montageleiste der Wand und/oder eine Anlagefläche der Montageleiste der Bodenstruktur wenigstens im Wesentlichen entlang der gesamten Länge der Wand und/oder der Bodenstruktur durchgängig erstreckt.

Um die Montageleisten der Wand und der Bodenstruktur nicht nur zur Positionierung der Wand und für einen Formschluss zu nutzen, bietet es sich an, wenn die Montageleiste der Wand und die Montageleiste der Bodenstruktur kraftschlüssig und/oder stoffschlüssig miteinander verbunden sind. Dabei kann der Stoffschluss durchgängig vorgesehen oder wie es für eine kraftschlüssige Verbindung bevorzugt ist, mehrfach entlang der gesamten Länge der Wand vorgesehen sein. Die bevorzugte, weil einfach schnell und kostengünstig herzustellende, kraftschlüssige Verbindung stellt dabei eine Schraubverbindung dar. Den Montageleisten kommen dann weitere Funktionen zu, so dass entsprechende Synergien genutzt werden können. Dies gilt insbesondere für den Fall, dass die korrespondierenden Anlageflächen miteinander verklebt und/oder gemeinsam von wenigstens einer Schraube durchdrungen sind. Auch hier ist es aus den genannten Gründen bevorzugt, mehrere Schrauben entlang der Montageleisten bzw. der wenigstens einen Wand vorzusehen.

Damit es nicht zu einer Beeinträchtigung der Ladung, des Beladens und/oder des Entladens kommt, kann die Anlagefläche der Montageleiste der Bodenstruktur und/oder die Anlagefläche der Montageleiste der wenigstens einen Wand unterhalb einer durch die Oberseite des Ladebodens definierten Ebene angeordnet sein. Auf diese Weise wird auch sichergestellt, dass die Verbindung zwischen der Wand und der Bodenstruktur beim Befahren des Laderaums bzw. des Ladebodens nicht beschädigt wird. Dabei kann die entsprechende Anordnung der Anlageflächen bzw. der Montageleisten zweckmäßig dadurch ermöglicht werden, dass die Anlagefläche der Montageleiste der Bodenstruktur durch eine Innsenseite einer Rinne in der Bodenstruktur gebildet wird. Die Rinne erstreckt sich dabei in konstruktiv einfacher Weise vorzugsweise seitlich zur Bodenstruktur bzw. parallel zur Wand. Alternativ oder zusätzlich kann die Rinne in einfacher Weise mit einem Querschnitt nach Art einer Nut bereitgestellt werden. Dabei muss die Nut keinen rechteckigen Querschnitt aufweisen, sie wird aber bevorzugt noch oben offen sein.

Eine zweckmäßige und stabile Verbindung zwischen der Wand und der Bodenstruktur lässt sich erreichen, wenn wenigstens ein Schraubenkopf und/oder wenigstens eine Mutter der wenigstens einen Schraubverbindung zwischen den Montageleisten der Bodenstruktur und der wenigstens einen Wand unterhalb einer durch die Oberseite des Ladebodens definierten Ebenen angeordnet ist. Dies gilt insbesondere dann, wenn der wenigstens eine Schraubenkopf und/oder die wenigstens eine Mutter in einer seitlichen Rinne in der Bodenstruktur aufgenommen ist. Der Schraubenkopf und/oder die Mutter müssen zwar nicht zwingend vollständig aufgenommen sein, allerdings ist es aus den genannten Gründen zweckdienlich, wenn dies wenigstens überwiegend, insbesondere vollständig, der Fall ist.

Um eine Wand vor Beschädigung beim Be- und Entladen des Laderaums zu schützen, bietet es sich an, am unteren Rand der wenigstens einen Wand eine Sockelscheuerleiste vorzusehen, und zwar insbesondere an wenigstens einer Seitenwand des Kofferaufbaus. Zur Vereinfachung der Konstruktion des Kofferaufbaus bietet es sich dann an, wenn die wenigstens eine Sockelscheuerleistung die Montageleiste der wenigstens einen Wand bildet bzw. umfasst. Zusätzliche, aufwendige Fertigungsschritte sind dann zur Bereitstellung der Montageleiste entbehrlich. Alternativ kann es aus konstruktiven Gesichtspunkten und zur Stabilisierung der Bodenstruktur zweckmäßig sein, wenn die Montageleiste der Bodenstruktur durch ein Bodenprofil bereitgestellt wird. Die entsprechende Montageleiste ist dabei der Einfachheit halber der wenigstens einen Wand zugeordnet. Außerdem wird die Fertigung des Kofferaufbaus vereinfacht und der Kofferaufbau ausgesteift, wenn das Bodenprofil einen Teil eines aus Bodenprofilen gebildeten Bodenrahmens bildet. Der Bodenrahmen ist dann vorzugweise umlaufend um die Bodenstruktur bzw. den Ladeboden vorgesehen. Der Bodenrahmen kann mithin den umlaufenden Rand der Bodenstruktur bilden, was der Stabilität der Bodenstruktur dienlich ist.

Um die Fertigung des Kofferaufbaus zu vereinfachen und Kosten einzusparen, kann die Sockelscheuerleiste und/oder das Bodenprofil als Blechteil ausgebildet werden. Dies gilt insbesondere auch dann, wenn die Sockelscheuerleiste und/oder das Bodenprofil durch Rollieren gefertigt wird. Gerade dann ist es fertigungstechnisch bevorzugt, die Sockelscheuerleiste und/oder das Bodenprofil aus Stahlblech zu bilden. Dies ist aber bereits aus Stabilitätsgründen und für eine langlebige Verbindung zwischen Wand und Bodenstruktur bevorzugt. Alternativ oder zusätzlich kann die Anlagefläche der Montageleiste der Bodenstruktur und/oder die Anlagefläche der Montageleiste der wenigstens einen Wand wenigstens abschnittsweise an einer Falzstruktur der Sockelscheuerleiste und/oder des Bodenprofils vorgesehen sein. So lässt sich beispielsweise für die Fertigung der Sockelscheuerleiste und/oder des Bodenprofils ein recht dünnes Blech verwenden, das im Bereich der Falz dennoch eine ausreichende Festigkeit und Steifigkeit für eine zuverlässige und langlebige Verbindung zwischen der Wand und der Bodenstruktur aufweist.

Die Verbindung der Wand mit der Bodenstruktur kann ergänzt werden, wenn eine weitere Verbindung neben den korrespondierenden Montageleisten vorgesehen wird. Diese kann beispielsweise einen dichten Abschluss am unteren Rand der Wand ermöglichen. Der Einfachheit halber wird die wenigstens eine Wand dann von der Außenseite des Kofferaufbaus mit der Bodenstruktur, und zwar insbesondere einer Außenseite, verbunden. Dabei ist es konstruktiv bevorzugt, wenn beispielsweise die entsprechende Außenseite von einem Bodenprofil der Bodenstruktur bereitgestellt wird. Fertigungstechnisch einfach ist es zudem, wenn die wenigstens eine zusätzliche Verbindung eine kraftschlüssige und/oder eine stoffschlüssige Verbindung ist. Dabei lassen sich Klebeverbindungen sehr einfach fügen. Um direkt mit dem Fügen der Verbindung eine entsprechende Stabilität bereitstellen zu können, kann sich alternativ oder zusätzlich wenigstens eine Verschraubung anbieten.

Zur Aussteifung der Bodenstruktur kann diese eine Reihe von wenigstens im Wesentlichen parallel zueinander angeordneten und voneinander beabstandeten Querträgern aufweisen. Dabei bietet es sich dann zur Aussteifung des Kofferaufbaus an, wenn die wenigstens eine Wand und/oder das Bodenprofil mit wenigstens einigen der Querträger kraftschlüssig und/oder stoffschlüssig verbunden ist. Einfach und schnell lässt sich eine sehr feste Verbindung insbesondere durch Verschrauben bereitstellen.

Grundsätzlich kann die wenigstens eine Wand zweckmäßig mit den Stirnseiten von wenigstens einigen der Querträger und/oder mit einer Außenseite eines Bodenprofils verschraubt sein, um einen stabilen Kofferaufbau zu erreichen. Dies ist zudem besonders einfach möglich, wenn die Wand von der Außenseite des Kofferaufbaus mit den Stirnseiten von wenigstens einigen der Querträger und/oder mit einer Außenseite eines Bodenprofils verschraubt wird.

Ein leichter und dennoch stabiler Kofferaufbau kann erreicht werden, wenn die wenigstens eine Wand einschalig ausgebildet ist. Dabei weist die Wand dann aus konstruktiver Sicht ein äußeres Wandpaneel und innere, wenigstens im Wesentlichen senkrecht zur Oberseite des Ladebodens sowie voneinander beabstandet angeordnete Ständerelemente auf, um die Wand auszusteifen. Alternativ kann die Wand aber auch als ein zweischaliges Wandelement ausgebildet sein, das eine äußere Decklage, eine innere Decklage und eine zwischen der äußeren Decklage und der inneren Decklage angeordnete, geschäumte Kernlage umfasst. Die äußere und die innere Decklage sind dabei bevorzugt strukturgebend ausgebildet. Hier kann die Kernlage stabilisierend und zudem isolierend wirken, weshalb das zweischalige Wandelement aus Gewichtsgründen und für den Kühltransport von temperaturempfindlichen Gütern bevorzugt sein kann.

Die wenigstens eine Wand kann an ihrem unteren Rand zwei über eine Falz miteinander verbundene Blechlagen aufweisen. Dadurch wird ein zweckmäßiger und zugleich einfach zu fertigender sowie leichter unterer Abschluss der Wand ermöglicht.

Dies gilt insbesondere für den Fall, dass eine Blechlage vorzugsweise dem Wandelement und eine Blechlage der Bodenstruktur, insbesondere dem Bodenprofil, zugeordnet ist. Dabei kann die eine Blechlage zunächst an der Wand und die andere Blechlage zunächst an der Bodenstruktur festgelegt werden, bevor die Blechlagen miteinander verbunden werden. Auf diese Weise lässt sich die Fertigung des Kofferaufbaus vereinfachen. Dies gilt alternativ oder zusätzlich auch für den Fall, dass die der Bodenstruktur, insbesondere dem Bodenprofil, zugeordnete Blechlage mit der Bodenstruktur, insbesondere dem Bodenprofil, verbunden, insbesondere verschraubt und/oder verklebt, ist. Die der Wand zugeordnete Decklage kann der Einfachheit halber, insbesondere mit der Außenseite der Wand verklebt werden.

Bei einer ersten besonders bevorzugten Ausgestaltung des Verfahrens werden die Montageleisten der wenigstens einen Wand und der Bodenstruktur, insbesondere des Bodenprofils, vom Laderaum des Kofferaufbaus miteinander kraftschlüssig verbunden. Dies ist besonders einfach durch ein Verschrauben möglich, wobei wenigstens eine Schraube ebenfalls der Einfachheit halber vom Laderaum aus eingesteckt und angezogen werden kann. Wenn die Schraube dabei die Montageleisten bzw. die Anlageflächen der Montageleisten durchgreift, können die Montageleisten zweckmäßig und stabil kraftschlüssig gegeneinander festgelegt werden. Alternativ oder zusätzlich können die wenigstens eine Wand und die Bodenstruktur, insbesondere das Bodenprofil, von der Außenseite des Kofferaufbaus kraftschlüssig verbunden, insbesondere verschraubt, werden, um den Kofferaufbau stabiler und steifer ausbilden zu können.

Wenn eine der Bodenstruktur zugeordnete Blechlage der wenigstens einen Wand zunächst mit der Bodenstruktur verbunden, insbesondere verschraubt, wird, kann nach dem Aufsetzen der wenigstens einen Wand mit der Montageleiste auf die Montageleiste der Bodenstruktur die entsprechende Blechlage über eine Falzverbindung mit einer Blechlage der wenigstens einen Wand verbunden werden, die selbst vorzugsweise bereits vor dem Fügen an der Wand festgelegt worden ist.

Dies vereinfacht die Fertigung einer, insbesondere nach unten abgeschlossenen Wand des Kofferaufbaus.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einem erfindungsgemäßen Kofferaufbau in einer perspektivischen Ansicht,
- Fig. 2: einen Abschnitt der Seitenwand gemäß Fig. 1 in einer perspektivischen Ansicht,
- Fig. 3A-B: unterschiedliche Ständerelemente zur Bildung eines der Seitenwand in einer perspektivischen Ansicht,
- Fig. 4: ein Wandpaneel zur Bildung der Seitenwand in einer perspektivischen Ansicht,
- Fig. 5: den Schichtaufbau des Wandpaneels in einem Querschnitt und
- Fig. 6: ein Detail der Seitenwand in einer Schnittansicht,
- Fig. 7: die Stirnwand gemäß Fig. 1 in einer perspektivischen Ansicht
- Fig. 8: ein Detail des Kofferaufbaus im Bereich der Verbindung einer Seitenwand mit der Bodenstruktur in einer Schnittansicht und
- Fig. 9: ein Detail eines alternativen Kofferaufbaus im Bereich der Verbindung einer Seitenwand mit der Bodenstruktur in einer Schnittansicht.

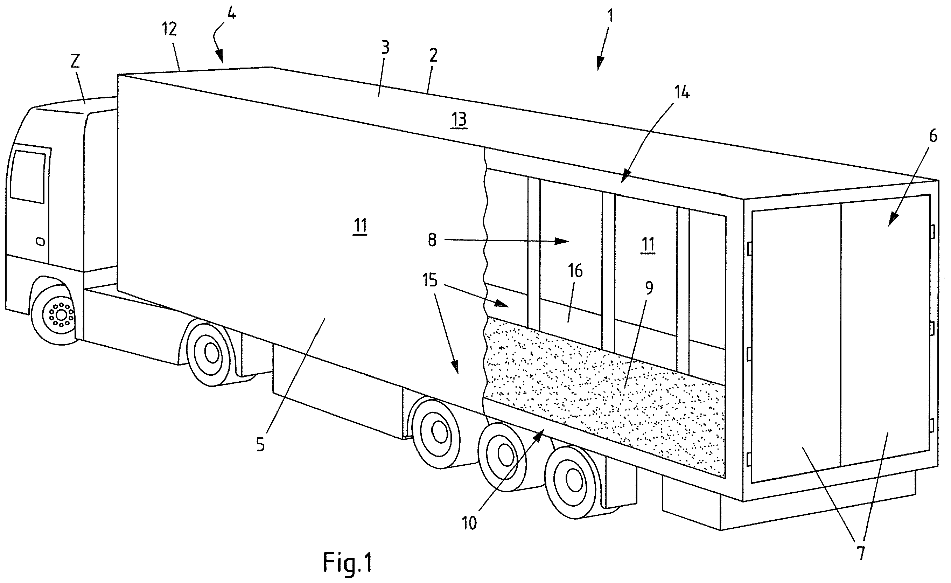

In der Fig. 1 ist ein Nutzfahrzeug 1 mit einem Kofferaufbau in einer perspektivischen Ansicht dargestellt, das von einer Zugmaschine Z gezogen wird. Der Kofferaufbau 2 umfasst ein festes Dach 3, feste Wände 4,5, welche die Stirnwand 4 und die Seitenwände 5 bilden, sowie eine feste Rückwand 6, die im Wesentlichen durch zwei Flügeltüren 7 gebildet wird. Zudem umfasst der Aufbau einen Laderaum 8, der nach unten durch einen Ladeboden 9 begrenzt wird, der dem Aufstellen von Ladung dient. Dabei wird der Ladeboden 9 von einer Bodenstruktur 10 des Kofferaufbaus 2 getragen. Die Seitenwände 5, die Stirnwand 4 und das Dach 3 weisen an ihren vom Laderaum 8 wegweisenden Außenseiten Wandpaneele 11,12,13 auf, welche die Seitenwände 5 und das Dach 3 nach außen verschließen, so dass der Kofferaufbau 2 für den Trockentransport geeignet ist.

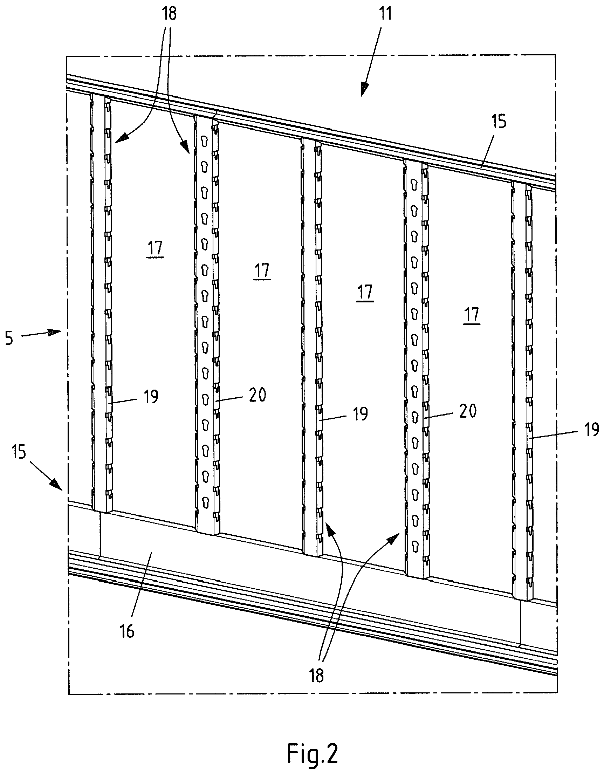

In der Fig. 2 ist ein Abschnitt einer Seitenwand 5 dargestellt, die bei dem dargestellten und insoweit bevorzugten Kofferaufbau 2 einschalig ausgebildet ist. Die einzige Schale der Seitenwand 5 wird durch das die Seitenwand verschließende Wandpaneel 11 gebildet. Die Seitenwand 5 und/oder das Wandpaneel 11 ist am oberen Rand mit einem Holm bzw. einer Holmstruktur 14 verbunden, die sich entlang der Seitenwand 5 erstreckt und die Verbindung der Seitenwand 5 mit dem Dach 3 bereitstellt. Dabei kann die Holmstruktur 14 wahlweise als Teil der Seitenwand 5 oder als Teil des Dachs 3 angesehen werden. Jedenfalls ist die Holmstruktur 14 als verwindungssteifes Trägerelement mit einem hohen Flächenträgheitsmoment ausgebildet, um so der Aussteifung des Kofferaufbaus 2 zu dienen. Zudem ist bei dem dargestellten und insoweit bevorzugten Kofferaufbau eine analoge Holmstruktur in der Verbindung zwischen der Stirnwand und dem Dach vorgesehen, auch wenn diese sich in Querrichtung und nicht in Längsrichtung des Kofferaufbaus erstreckt.

Bei dem dargestellten und insoweit bevorzugten Kofferaufbau 2 ist dem unteren Rand 15 der Seitenwand 5 und/oder dem Wandpaneel 11 zugeordnet eine sogenannte Sockelscheuerleiste 16 vorgesehen, die die Seitenwand 5 vor Beschädigungen während des Be- und Entladens schützt. So stoßen bzw. scheuern Hubwagen, Rollwagen, Paletten etc. beim Be- und Entladen vornehmlich an der Sockelscheuerleiste 16, die diesen Belastungen besser widerstehen kann, als andere Bereiche der Seitenwand 5. Eine Sockelscheuerleiste 16 ist jedoch nicht zwingend erforderlich, insbesondere kann im Bereich der Stirnwand 4 bedarfsweise auf eine Sockelscheuerleiste 16 verzichtet werden.

Das Wandpaneel 11 der Seitenwand 5 des dargestellten und insoweit bevorzugten Kofferaufbaus 2 weist eine Reihe von in Längsrichtung des Kofferaufbaus 2 nebeneinander angeordneter Paneelelemente 17 auf, die sich wenigstens im Wesentlichen über die gesamte Breite oder Höhe des Wandpaneels 11 bzw. der Seitenwand 5 erstrecken. Die Längsrichtung des Kofferaufbaus 2 entspricht dabei vornehmlich der Fahrtrichtung des Kofferaufbaus 2, erstreckt sich also von vorne nach hinten oder umgekehrt durch den Kofferaufbau 2. Den Verbindungsbereichen 18 zweier aneinander angrenzender Paneelelemente 17 zugeordnet ist jeweils ein Ständerelement 19,20, das sich quer zur Längsrichtung des Wandpaneels 11 bzw. der Seitenwand 5 erstreckt. Bei der dargestellten und insoweit bevorzugten Seitenwand 5 erstrecken sich die Ständerelemente 19,20 wenigstens im Wesentlichen vertikal. Zudem erstrecken sich die Ständerelemente 19,20 über die gesamte Breite oder Höhe des Wandpeneels 11 bzw. der Seitenwand 5. Dadurch tragen die Ständerelemente 19,20 die Holmstruktur 14 bzw. das Dach 3, dessen Gewicht über die Holmstruktur 14 wenigstens teilweise an die Ständerelemente 19,20 abgeleitet wird. Die Gewichtskräfte des Dachs 3 werden von den Ständerelementen 19,20 in die den Ladeboden 9 tragende Bodenstruktur 10 des Kofferaufbaus 2 weitergeleitet.

Die einzelnen Paneelelemente 17 weisen eine Breite zwischen 550 mm und 650 mm auf. Mithin beträgt auch der Abstand jeweils benachbarter Ständerelemente 19,20 ebenfalls zwischen 550 mm und 650 mm. Es wären aber auch Breiten der Paneelelemente 17 zwischen beispielsweise 1100 mm und 1300 mm denkbar und zweckmäßig. Dann würde bedarfsweise der Abstand der jeweils benachbarten Ständerelemente 19,20 wenigstens etwa der Breite der Paneelelemente 17 entsprechen. Der Abstand wird dabei nicht von den einander zugeordneten Rändern der Ständerelemente 19,20, sondern von den Mittellinien der Ständerelemente 19,20 oder den Stellen der Ständerelemente 19,20 aus gemessen, die die Verbindungsbereiche 18 der zugeordneten Paneelelemente 17 überdecken. Bei der dargestellten und insoweit bevorzugten Seitenwand 5 sind zwei Arten von Ständerelementen 19,20 vorgesehen, die jeweils abwechselnd zueinander entlang der Längsrichtung des Kofferaufbaus 2 vorgesehen sind.

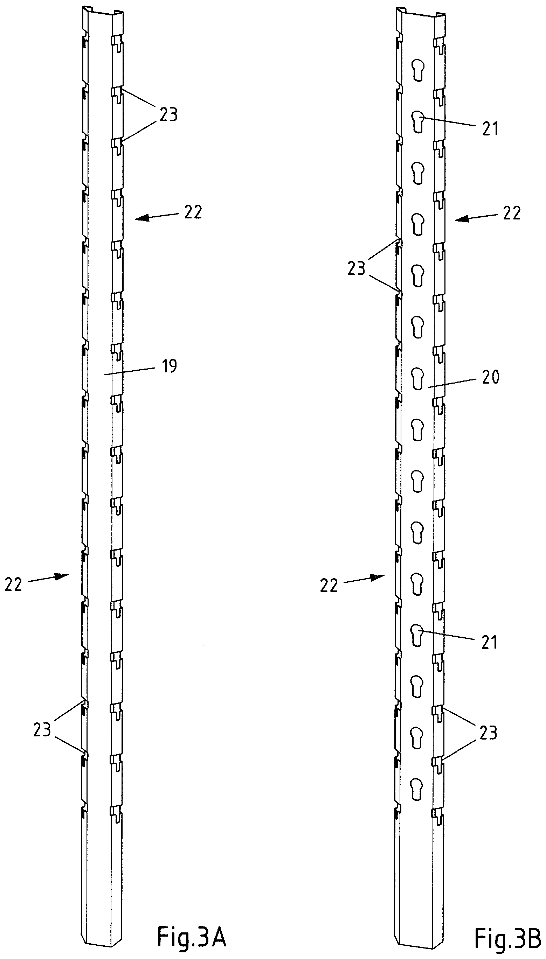

In der Fig. 3A-B sind die beiden Arten von Ständerelementen 19,20 separat dargestellt. Eine Art der Ständerelemente 19 ist schmaler als die andere Art der Ständerelemente 20. Die breitere Art der Ständerelemente 19,20 weist zudem an der von dem Wandpaneel 11 wegweisenden Seiten über die Länge des Ständerelements 19,20 verteilt mehrere Ladungssicherungsöffnungen 21 zum Einhaken von Ladungssicherungsmitteln auf. Die breiteren Ständerelemente 20 sind ferner so angeordnet, dass sie ausgehend von der Stirnwand 4, jeweils etwa im Abstand von einer Europalette, also etwa zwischen 1150 mm und 1250 mm aufeinanderfolgen. Der Abstand benachbarter Ständerelemente 19,20 kann mithin bevorzugt zwischen 550 mm und 650 mm betragen. Bedarfsweise, insbesondere in Bezug auf die Länge von Europaletten, kann der Abstand benachbarter Ständerelemente 19,20 aber auch zwischen 1100 mm und 1300 mm betragen. Insbesondere in Bezug auf die Breite von Europaletten in der Größenordnung von 800 mm kann der Abstand benachbarter Ständerelemente 19,20 aber auch zwischen 300 mm und 500 mm betragen. Den beiden Ständerelementen 19,20 ist gemein, dass sie seitliche, nach außen in Richtung des Wandpaneels abgeschrägte Seitenflächen 22 aufweisen, die bei einer Kollision mit der Ladung beim Be- und Entladen des Kofferaufbaus 2 die Ladung in Richtung des Laderaums 8 ableiten, um eine nachhaltige Beschädigung des entsprechenden Ständerelements 19,20 zu vermeiden. In den Seitenflächen 22 können über die Länge des Ständerelements 19,20 verteilt mehrere Ladungssicherungsöffnungen 23 zum Einhaken von Ladungssicherungsmitteln oder von Ladungssicherungsbalken vorgesehen sein. Grundsätzlich könnten anstelle von unterschiedlichen Arten von Ständerelementen 19,20 bei einer anderen Seitenwand 5 auch nur gleichartige Ständerelemente 19,20 vorgesehen sein.

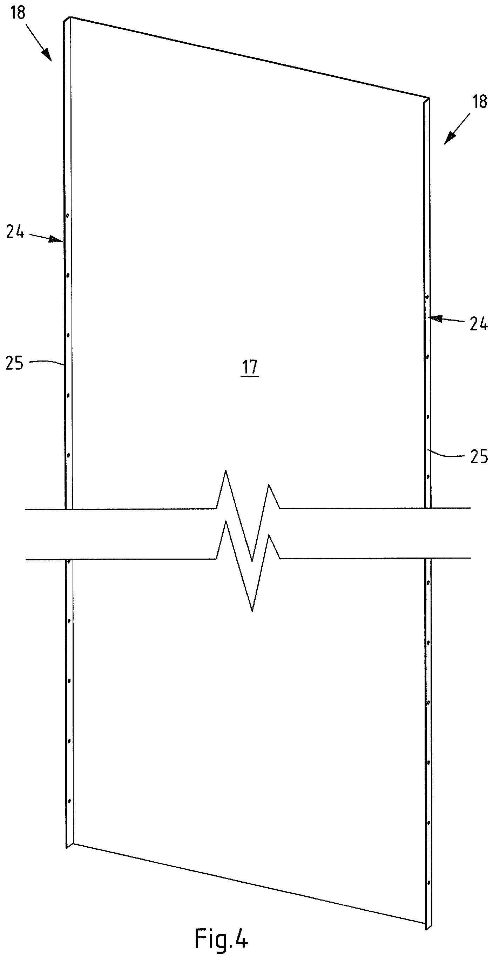

In der Fig. 4 ist ein Paneelelement 17 des Wandpaneels 11 der Seitenwand 5 aus Fig. 2 dargestellt. Die Paneelelemente 17 des Wandpaneels 11 sind gleichartig aufgebaut und weisen demnach jeweils dieselben Abmessungen auf, auch wenn dies nicht zwingend der Fall sein muss. Die Paneelelemente 17 sind in den Verbindungsbereichen 18 an ihren seitlichen Rändern 24 nach innen in Richtung des Laderaums 8 umgebogen, vorzugsweise abgekantet oder rolliert. Die Ränder 24 weisen daher jeweils eine Verbindungsfläche 25 auf, die aneinander angrenzend und wenigstens im Wesentlichen parallel zueinander ausgerichtet sind. Die entsprechenden Verbindungsflächen 25 werden dann zur Bildung des Wandpaneels 11 miteinander verbunden, insbesondere verklebt. Die Paneelelemente 17 sind jeweils als ein mehrschichtiges Verbundlaminat 26 ausgebildet.

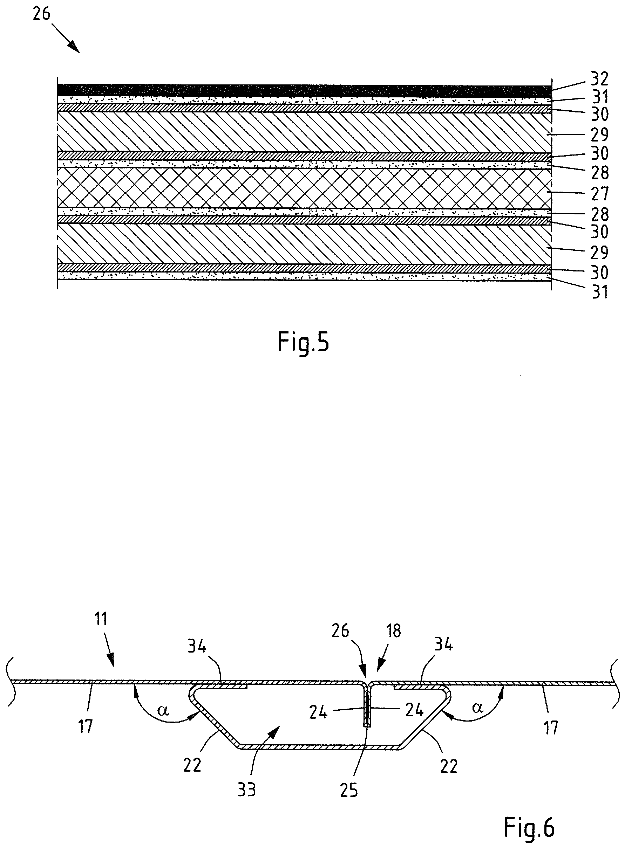

Der Aufbau des vorliegenden und insoweit bevorzugten Verbundlaminats 26 ist in der Fig. 5 exemplarisch dargestellt, wobei die Schichtdicken des Verbundlaminats nicht maßstabsgetreu wiedergegeben sind. Bei diesem Verbundlaminat 26 ist eine Kunststoffschicht 27 aus wenigstens im Wesentlichen einem Thermoplasten, vorzugsweise einem Olefin, insbesondere Polypropylen (PP) vorgesehen, in dessen äußere Schichten ein Haftvermittler in Form von Maleinsäureanhydrid eingebracht ist. Die Kunststoffschicht 27 weist eine Dicke zwischen 0,5 mm und 3 mm, vorzugsweise zwischen 0,6 mm und 2 mm, insbesondere zwischen 0,8 mm und 1,2 mm auf. Zudem sind auf die Außenseiten der Kunststoffschicht 27 Lackschichten, insbesondere Klarlackschichten 28 einer Dicke von etwa 1 µm aufgebracht. An diese Klarlackschichten 28 schließen sich Metallschichten 29 einer Dicke zwischen 50 µm und 900 µm, vorzugsweise zwischen 100 µm und 600 µm, insbesondere 200 µm bis 300 µm an, die jeweils an beiden Seiten mit einer Beschichtung, wie Magnesium-Zink-Beschichtung oder Aluminium-Zink-Beschichtung 30, einer Dicke von zwischen 8 µm und 30 µm, vorzugsweise zwischen 9 µm und 20 µm, insbesondere zwischen 10 µm und 15 µm versehen sind. Die äußeren Seiten der Metallschichten 29 sind wiederum mit einer Lackschicht, insbesondere Klarlackschicht 31, einer Dicke von etwa 1 µm überzogen. Die Außenseite des Paneelelements 17 bezogen auf den Laderaum 8 bzw. das Nutzfahrzeug 1 ist zudem mit einer Lackschicht 32, insbesondere Klarlackschicht versehen, die eine Dicke zwischen 10 µm und 15 µm aufweist.

In der Fig. 6 ist ein Querschnitt der Seitenwand 5 im Bereich eines Ständerelements 20 und eines Verbindungsbereichs 18 zweier Paneelelemente 17 dargestellt. Die Paneelelemente 17 weisen angrenzend zueinander umgebogene, insbesondere abgekantete oder rollierte, Ränder 24 auf, die sich bei den dargestellten und insoweit bevorzugten Paneelelementen 17 wenigstens abschnittsweise senkrecht zu dem Wandpaneel 11 nach innen in Richtung des Laderaums 8 erstrecken. In diesen Abschnitten weisen die Ränder 24 der Paneelelemente 17 aneinandergrenzende Verbindungsflächen 25 auf, die über eine Klebeverbindung 39 miteinander verklebt sind, auch wenn die Klebeverbindung 39 bedarfsweise eher dem Abdichten des Spalts zwischen den Paneelelementen 17 dient. Alternativ oder zusätzlich zu Klebeverbindungen können im Verbindungsbereich 18 kraftschlüssige und/oder formschlüssige Verbindungen, beispielsweise Nietverbindungen, vorgesehen sein. Der entsprechende Verbindungsbereich 18 wird von dem zugeordneten Ständerelement 20 überdeckt und übergriffen. Das Ständerelement 20 weist dabei die Form eines einseitig offenen Hohlprofils auf, das in seinem Inneren eine Aufnahme 33 für wenigstens Teile des Verbindungsbereichs 18 bereithält. Das Ständerelement 20 weist dabei einen trapezförmigen Querschnitt mit zwei in Richtung des Wandpaneels 11 schräg nach außen geneigten Seiten 22 auf. Diese Seiten 22 verlaufen dabei in einem Winkel α von etwa 130° bis 150° in Bezug auf den sich seitlich anschließenden Bereich der Paneelelemente 17. Angrenzend zu den beiden dem Ständerelement 20 zugeordneten Paneelelementen 17 weist das Ständerelement 20 Anlageflächen 34 zur Anlage an die Paneelelemente 17 auf, wobei die Anlageflächen 34 vorliegend wenigstens im Wesentlichen parallel zueinander ausgerichtet und vorliegend auch wenigstens im Wesentlichen in einer gemeinsamen Ebene angeordnet sind. Mit diesen Anlageflächen 34 ist das Ständerelement 20 mit den angrenzenden Paneelelementen 17 verbunden, insbesondere verklebt.

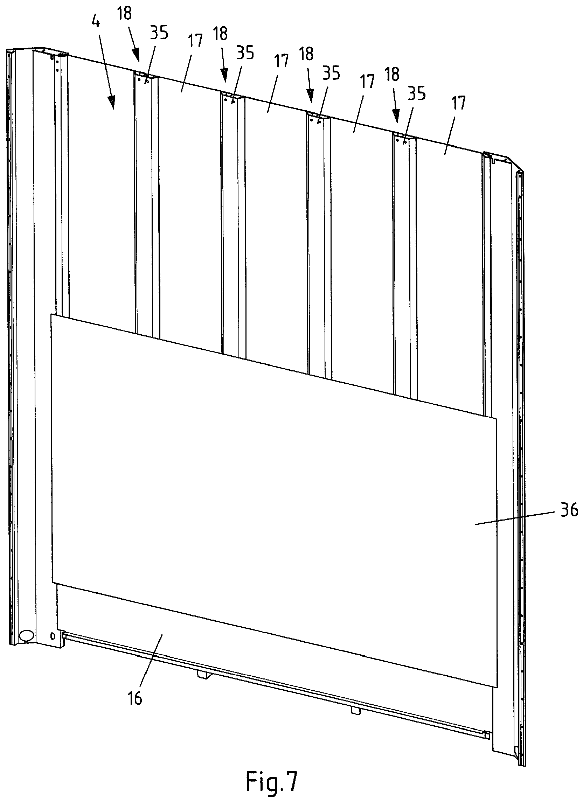

In der Fig. 7 ist die als Stirnwand 4 ausgebildete weitere Wand 4 des dargestellten und insoweit bevorzugten Kofferaufbaus 2 dargestellt. Die Stirnwand 4 ist dabei grundsätzlich analog zur Wand 5 in Form der Seitenwand 5 ausgebildet. Im Unterschied zur Seitenwand 5 ist bei der Stirnwand 4 jedoch vorzugsweise der Abstand der Ständerelemente 35 untereinander geringer. Zudem weisen die Ständerelemente 35 der Stirnwand 4 keine Ladungssicherungsöffnungen 23 zum Einhaken von Ladungssicherungsmitteln auf, obwohl dies möglich wäre. Die Ständerelemente 35 sind aber dennoch als offenes Hohlprofil mit einem trapezförmigen Querschnitt ausgebildet. Zudem weist auch die Stirnwand 4 des dargestellten und insoweit bevorzugten Kofferaufbaus 2 nebeneinander eine Reihe von Paneelelementen 17 auf, die über in den Ständerelementen 35 aufgenommene Verbindungsbereiche 18 miteinander verbunden sind, wie dies analog in der Fig. 6 dargestellt ist. Erforderlich ist dies jedoch nicht. Ferner ist an der Innenseite der Ständerelemente 35 der Stirnwand ein plattenförmiger Anfahrschutz 36 montiert, gegen den sich die Ladung abstützen kann. Am unteren Rand ist analog zur Seitenwand 5 eine Art Sockelscheuerleiste 16 vorgesehen, die weniger dem Schutz der Stirnwand 4 beim Be- und Entladen, sondern vielmehr dem Verbinden der Stirnwand 4 mit der Bodenstruktur 10 dient. Die entsprechende Sockelscheuerleiste ist in der Fig. 7 jedoch nur teilweise dargestellt, während die Holmstruktur 14 am oberen Rand der Stirnwand 4, die der Verbindung der Stirnwand 4 mit dem Dach 3 dient, nicht dargestellt ist.

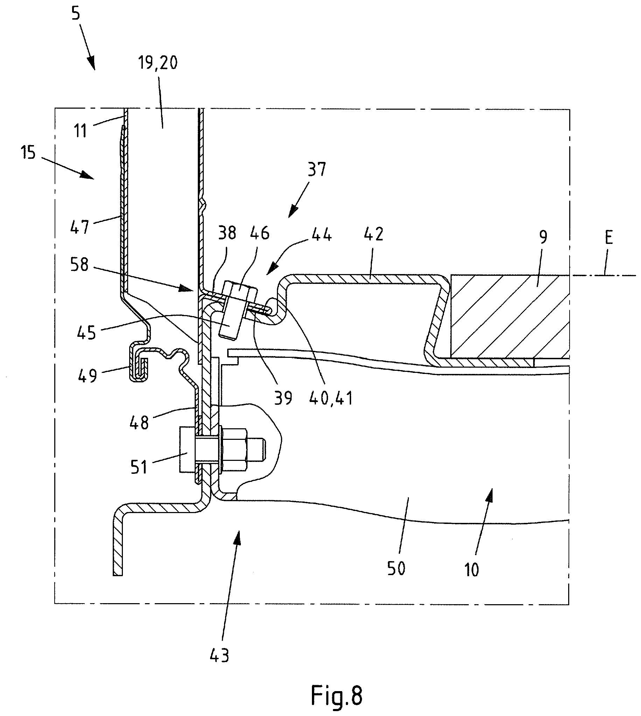

In der Fig. 8 ist der untere Rand 15 der Seitenwand 5 dargestellt, der mit der Bodenstruktur 10 fest verbunden ist. Dabei weist die Seitenwand am unteren Rand 15 wie die Bodenstruktur 10 am äußeren Rand 37 jeweils eine Montageleiste 38,39 zum Montieren der Seitenwand 5 an der Bodenstruktur 10 auf. Die Montageleisten 38,39 stellen dabei korrespondierende Anlageflächen 40,41 bereit, die im dargestellten und verbundenen Zustand der Seitenwand 5 mit der Bodenstruktur 10 aneinander anliegen. Zudem ist die Montageleiste 39 und die zugehörige Anlagefläche 41 der Bodenstruktur 10 so zu der Montageleiste 38 und die zugehörige Anlagefläche 40 der Seitenwand angeordnet, dass die Montageleiste 38 der Seitenwand 5 durch die Montageleiste 39 der Bodenstruktur 10 formschlüssig unterfangen wird. Des Weiteren sind die korrespondierenden Montageleisten 38,39 und Anlageflächen 40,41 schräg ausgerichtet, und zwar in einem Querschnitt zum Kofferaufbau 2 gesehen sowohl schräg zur Seitenwand 5 als auch schräg zur Bodenstruktur 10. Dabei erstrecken sich die Montageleiste 38 und die Anlagefläche 40 der Seitenwand 5 wenigstens im Wesentlichen in Richtung des Laderaums 8 bzw. der Bodenstruktur 10 schräg nach unten, während sich die Montageleiste 39 und die Anlagefläche 41 der Bodenstruktur 10 zur Außenseite des Kofferaufbaus 2 bzw. der Seitenwand 5 schräg nach oben erstrecken.

Dies kann beim Fügen der Seitenwand 5 mit der Bodenstruktur 10 dazu genutzt werden, dass sich die Seitenwand 5 und die Bodenstruktur 10 finden, insbesondere in der vorbestimmten Position zueinander. Wird die Seitenwand 5 seitlich an die Bodenstruktur 10 angenähert und die Seitenwand 5 dann nach unten abgesetzt, gelangen die Anlageflächen 40,41 der Montageleisten 38,39 in Anlage aneinander, so dass die Anlagefläche 40 der Seitenwand 5 an der Anlagefläche 41 der Bodenstruktur 10 abgleitet. Dies geht einher mit einem Heranrücken der Seitenwand 5 seitlich an die Bodenstruktur 10, bis die Seitenwand 5 die gewünschte Position zur Bodenstruktur 10 eingenommen hat und ein Formschluss nach unten bzw. in Schwerkraftrichtung zwischen den Montageleisten 38,39 etabliert ist.

Die Montageleisten 38,39 der Seitenwand 5 und der Bodenstruktur 10 sind oberhalb eines unteren Endes der Seitenwand 5 sowie unterhalb eines seitlichen unteren Endes der Bodenstruktur 10 angeordnet, so dass die Seitenwand 5 bereits mehr oder weniger durch die Bodenstruktur 10 abgestützt werden kann, bereits bevor die Anlageflächen 40,41 der Montageleisten 38,39 gegenseitig in Anlage gelangen. Außerdem können so die Seitenwand 5 und die Bodenstruktur 10 im miteinander verbundenen Zustand auch seitlich unterhalb der Montageleisten 38,39 in Anlage aneinander gelangen und so einem Kippen der Seitenwand 5 zur Außenseite des Kofferaufbaus 2 entgegenwirken.

Bei dem dargestellten und insoweit bevorzugten Kofferaufbau 2 erstrecken sich die Montageleisten 38,39 und die zugehörigen Anlageflächen 40,41 wie in der Fig. 8 dargestellt längs der Seitenwand 5, und zwar vorzugsweise wenigstes im Wesentlichen über die gesamte Länge der Seitenwand 5 sowie durchgängig. Grundsätzlich wäre es aber auch denkbar, dass die Montageleisten 38,39 und die zugehörigen Anlageflächen 40,41 entlang der Seitenwand 5 abschnittsweise unterbrochen sind. Dann können entlang der Seitenwand 5 in einer Reihe beabstandet hintereinander Montageleisten 38,39 und zugehörige Anlageflächen 40,41 vorgesehen sein. Zudem ist bei dem dargestellten und insoweit bevorzugten Kofferaufbau 2 an der Bodenstruktur 10 angrenzend zur Seitenwand 5 ein Bodenprofil 42 vorgesehen. Das Bodenprofil 42 bildet beim dargestellten und insoweit bevorzugten Kofferaufbau 2 zusammen mit den an den anderen Rändern der Bodenstruktur 10 vorgesehenen Bodenprofilen 42 einen umlaufenden Bodenrahmen 43.

In der Bodenstruktur 10 bzw. in dem Bodenprofil 42 ist seitlich entlang der Seitenwand 5 eine Rinne 44 vorgesehen, die im Querschnitt nach Art einer Nut ausbildet ist und deren Innenseite die Montageleiste 39 und die zugehörige Anlagefläche 41 der Bodenstruktur 10 bereitstellen. Dabei ist das Bodenprofil 42 bzw. die Rinne 44 so ausgebildet, dass im verbundenen Zustand der Seitenwand 5 die Anlageflächen 40,41 und die Montageleisten 38,39 jeweils unterhalb der durch die Oberseite des Ladebodens 8 definierten Ebene E angeordnet sind. Zudem sind die Montageleisten 38,39 über Schrauben 45 entlang der Seitenwand 5 miteinander verbunden, wobei die Schrauben 45 die Montageleisten 38,39 und Anlageflächen 40,41 abschnittsweise durchdringen. Die Schrauben 45 sind zudem so von oben, insbesondere vom Laderaum 8 aus, eingeführt und verschraubt, dass die Schraubenköpfe 46 ebenfalls in der seitlichen Rinne 44 der Bodenstruktur 10 und unterhalb der Oberseite des Ladebodens 8 angeordnet sind. Zusätzlich zur Verschraubung, die vorzugsweise eine Reihe von Schrauben 45 in der Längsrichtung der Seitenwand 5 umfasst, können die Anlageflächen 40,41 der Montageleisten 38,39 miteinander verklebt sein.

Bei dem dargestellten und insoweit bevorzugten Kofferaufbau 2 weist die Seitenwand 5 eine Sockelscheuerleiste 16 auf, welche die Montageleiste 38 der Seitenwand 40 bereitstellt. Dabei ist die Montageleiste 38 im dargestellten und insoweit bevorzugten Ausführungsbeispiel in Form einer Falz 58 ausgebildet. Die Sockelscheuerleiste 16 als solche ist dabei als Blechteil ausgebildet, wobei das Blech, insbesondere Stahlblech, im Bereich der Montageleiste 38 zweifach aufeinander gelegt ist. Die Form der dargestellten Sockelscheuerleiste 16 ist dabei durch Rollieren erzeugt worden. Ebenfalls ist das seitliche Bodenprofil 42 durch Rollieren hergestellt worden, was jedoch ebenfalls nicht zwingend ist.

Am unteren Ende der Seitenwand 5 sind zwei Blechlagen 47,48 vorgesehen, die über eine Falzverbindung 49 miteinander verbunden sind und so die Seitenwand 5 nach unten abschließen. Dabei ist eine Blechlage 47 der Seitenwand 5 und eine Blechlage 48 der Bodenstruktur 10 zugeordnet. Die der Bodenstruktur 10 zugeordnete Blechlage 48 ist zudem mit einer Schraube 49 mit dem Bodenprofil 10 verbunden. Die andere Blechlage 47 ist an der Außenseite der Seitenwand 5 vorgesehen und dort vorzugsweise verklebt. Es kann sich aber auch um eine Fortsetzung des Wandpaneels 11 nach unten handeln. Jedenfalls ist es bevorzugt, wenn die beiden Blechlagen 47,48 erst nach der eigentlichen Montage der Seitenwand 5 erfolgt, die insbesondere nach der Montage der einen Blechlage 48 an der Bodenstruktur 10 bzw. dem Bodenprofil 42 durchgeführt wird. Abschließend werden die beiden Blechlagen 47,48 dann durch bekannte Werkzeuge über eine Falz 49 miteinander verbunden.

Unterhalb des Ladebodens 9 sind bei dem dargestellten und insoweit bevorzugten Kofferaufbau 2 eine Reihe von Querträgern 50 angeordnet. Die Querträger 50 sind parallel zueinander und voneinander beabstandet vorgesehen. Dabei können die Querträger 50 mehr oder weniger gleichmäßig über die Längserstreckung der Bodenstruktur 10 verteilt angeordnet sein. Zudem sind die Seitenwände 5 und die Bodenprofile 42 mit den Querträgern 50 verbunden, und zwar insbesondere über Schraubverbindungen 51. Die Verschraubungen 51 sind dabei durch die dem Bodenprofil zugeordnete Blechlage hindurchgeführt.

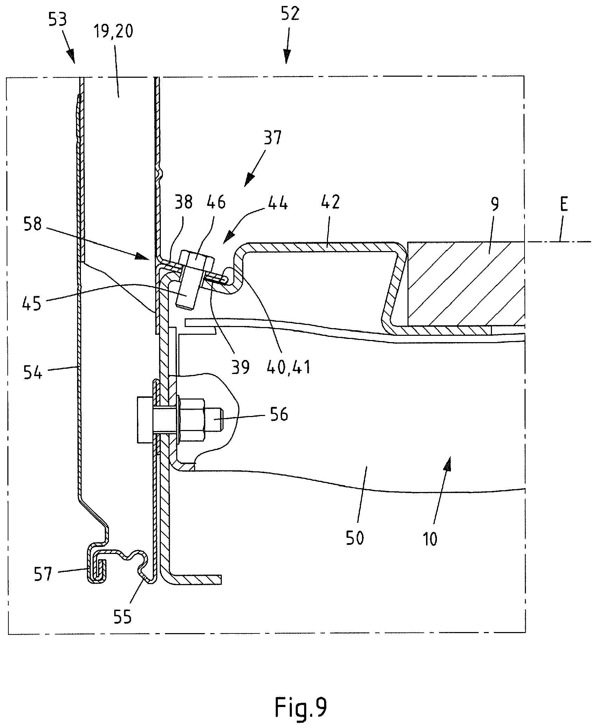

In der Fig. 9 ist ein alternativer Kofferaufbau 52 im Bereich der Verbindung einer Seitenwand 53 mit der Bodenstruktur 10 in einer Schnittansicht dargestellt. Die Bodenstruktur 10 entspricht dabei der Bodenstruktur 10 des zuvor beschriebenen Kofferaufbaus 2, jedoch erstreckt sich die Seitenwand 53 weiter in Richtung des unteren Rands des Bodenprofils 42. Am unteren Ende der Seitenwand 53 sind ebenfalls zwei Blechlagen 54,55 vorgesehen, wobei die der Seitenwand 53 zugeordnete Blechlage 54 mit der Außenseite der Seitenwand verklebt und die der Bodenstruktur 10 zugeordnete Blechlage 55 mit dem Bodenprofil 42 und den Querträgern 50 über eine Schraubverbindung 56 verschraubt ist. Nach dem Absenken der Seitenwand 53 mit der bereits montierten, zugehörigen Blechlage 54 gegenüber dem Bodenprofil mit der bereits montierten, zugehörigen Blechlage 55 werden die Blechlagen 54,55 über eine Falz 57 verbunden. Zudem ist eine separate Schraubverbindung zwischen dem Bodenprofil 42 und den Querträgern 50 vorgesehen, die jedoch bereits vor dem Fügen der Seitenwand 53 vorgesehen ist. Im Übrigen sind die beiden Kofferaufbauten 2,52 wenigstens im Wesentlichen analog zueinander aufgebaut.

### Bezugszeichenliste

- 1: Nutzfahrzeug
- 2: Kofferaufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11-13: Wandpaneel
- 14: Holmstruktur
- 15: Rand
- 16: Sockelscheuerleiste
- 17: Paneelelement
- 18: Verbindungsbereich
- 19,20: Ständerelement
- 21: Ladungssicherungsöffnung
- 22: Seitenfläche
- 23: Ladungssicherungsöffnung
- 24: Rand
- 25: Verbindungsflächen
- 26: Verbundlaminat
- 27: Kunststoffschicht
- 28: Klarlackschicht
- 29: Metallschicht
- 30: Aluminium-Zink-Beschichtung
- 31: Klarlackschicht
- 32: Lackschicht
- 33: Aufnahme
- 34: Anlagefläche
- 35: Ständerelement
- 36: Anfahrschutz
- 37: Rand
- 38,39: Montageleiste
- 40,41: Anlagefläche
- 42: Bodenprofil
- 43: Bodenrahmen
- 44: Rinne
- 45: Schraube
- 46: Schraubenkopf
- 47,48: Blechlage
- 49: Falz
- 50: Querträger
- 51: Schraubverbindung
- 52: Kofferaufbau
- 53: Seitenwand
- 54,55: Blechlage
- 56: Verschraubung
- 57: Falz
- 58: Falz
- E: Ebene

## Patentansprüche

1. Kofferaufbau (2) eines Nutzfahrzeugs (1), insbesondere Lastkraftwagen, Anhänger oder Sattelauflieger, mit wenigstens einer den Laderaum (8) des Kofferaufbaus (2) begrenzenden Wand (4,5) und einer den Ladeboden (9) tragenden Bodenstruktur (10), wobei ein unterer Rand (15) der Wand mit einem äußeren Rand (37) der Bodenstruktur (10) fest verbunden ist, wobei der untere Rand (15) der wenigstens einen Wand (4,5) und der äußere Rand (37) der Bodenstruktur (10) jeweils eine Montageleiste (38,39) zum Montieren der Wand (4,5) an der Bodenstruktur (10) aufweisen und wobei die Montageleisten (38,39) der wenigstens einen Wand (4,5) und der Bodenstruktur (10) korrespondierende und aneinander anliegende Anlageflächen (40,41) aufweisen,
**dadurch gekennzeichnet, dass**
die wenigstens eine Anlagefläche (40) der Montageleiste (38) der Wand (4,5) sich schräg nach unten in Richtung der Bodenstruktur (10) erstreckt und in einer Richtung wenigstens im Wesentlichen senkrecht zur Bodenstruktur (10) von der sich schräg nach oben in Richtung der wenigstens einen Wand (4,5) erstreckenden wenigstens einen Anlagefläche (41) der Montageleiste (39) der Bodenstruktur (10) formschlüssig unterfangen ist.

2. Kofferaufbau nach Anspruch 1,
**dadurch gekennzeichnet, dass**
die Anlageflächen (40,41), insbesondere die Montageleisten (38,39), der wenigstens einen Wand (4,5) und der Bodenstruktur (10) oberhalb eines unteren Endes der wenigstens einen Wand (4,5) und/oder der Bodenstruktur (10) angeordnet sind.

3. Kofferaufbau nach Anspruch 1 oder 2,
**dadurch gekennzeichnet, dass**
sich die wenigstens eine Anlagefläche (40) der Montageleiste (38) der wenigstens einen Wand (4,5) und/oder die wenigstens eine Anlagefläche (41) der Montageleiste (39) der Bodenstruktur (10) wenigstens im Wesentlichen entlang der gesamten Länge der Wand (4,5) erstreckt und dass, vorzugsweise, sich die eine Anlagefläche (40) der Montageleiste (38) der Wand (4,5) und/oder die eine Anlagefläche (41) der Montageleiste (39) der Bodenstruktur (10) wenigstens im Wesentlichen entlang der gesamten Länge der Wand (4,5) und/oder der Bodenstruktur (10) erstreckt.

4. Kofferaufbau nach einem der Ansprüche 1 bis 3,
**dadurch gekennzeichnet, dass**
die Montageleiste (38) der Wand (4,5) und die Montageleiste (39) der Bodenstruktur (10), insbesondere mehrfach entlang der gesamten Länge der Wand (4,5), kraftschlüssig und/oder stoffschlüssig miteinander verbunden, insbesondere verschraubt sind und dass, vorzugsweise, die korrespondierenden Anlageflächen (40,41) miteinander verklebt und/oder gemeinsam von wenigstens einer Schraube (45) durchdrungen sind.

5. Kofferaufbau nach einem der Ansprüche 1 bis 4,
**dadurch gekennzeichnet, dass**
die Anlagefläche (41) der Montageleiste (39) der Bodenstruktur (10) und/oder die Anlagefläche (40) der Montageleiste (38) der wenigstens einen Wand (4,5) unterhalb einer durch die Oberseite des Ladebodens (9) definierten Ebene angeordnet sind und dass, vorzugsweise, die Anlagefläche (41) der Montageleiste (39) der Bodenstruktur (10) durch eine Innenseite einer seitlichen Rinne (44) in der Bodenstruktur (10) gebildet wird.

6. Kofferaufbau nach einem der Ansprüche 1 bis 5,
**dadurch gekennzeichnet, dass**
wenigstens ein Schraubenkopf (46) und/oder wenigstens eine Mutter der wenigstens einen Schraubverbindung (45) zwischen den Montageleisten (38,39) der Bodenstruktur (10) und der wenigstens einen Wand (4,5) unterhalb einer durch die Oberseite des Ladebodens (9) definierten Ebene angeordnet ist und dass, vorzugsweise, der wenigstens eine Schraubenkopf (46) und/oder die wenigstens eine Mutter, wenigstens vollständig, in einer seitlichen Rinne (44) in der Bodenstruktur (10) aufgenommen ist.

7. Kofferaufbau nach einem der Ansprüche 1 bis 6,
**dadurch gekennzeichnet, dass**
am unteren Rand (15) der wenigstens einen Wand (4,5) eine die Montageleiste (38) umfassende Sockelscheuerleiste (16) vorgesehen ist und/oder dass der wenigstens einen Wand (4,5) zugeordnet ein die Montageleiste (38) der Bodenstruktur (10) umfassendes Bodenprofil (42), insbesondere als Teil eines aus Bodenprofilen (42) gebildeten Bodenrahmens (43), vorgesehen ist.

8. Kofferaufbau nach einem der Ansprüche 1 bis 7,
**dadurch gekennzeichnet, dass**
die Sockelscheuerleiste (16) und/oder das Bodenprofil (42) als, insbesondere rolliertes, Blechteil, vorzugsweise aus Stahlblech, ausgebildet ist und/oder dass die Anlagefläche (41) der Montageleiste (39) der Bodenstruktur (10) und/oder die Anlagefläche (40) der Montageleiste (38) der wenigstens einen Wand (4,5) wenigstens abschnittsweise an einer Falzstruktur(58) der Sockelscheuerleiste (16) und/oder des Bodenprofils (42) vorgesehen ist.

9. Kofferaufbau nach einem der Ansprüche 1 bis 8,
**dadurch gekennzeichnet, dass**
die wenigstens eine Wand (4,5) von der Außenseite des Kofferaufbaus (2) mit, vorzugsweise einer Außenseite, der Bodenstruktur (10), insbesondere des Bodenprofils (42), verbunden ist und dass die wenigstens eine Verbindung eine kraftschlüssige, insbesondere wenigstens eine Verschraubung, (51,56) und/oder eine stoffschlüssige, insbesondere wenigstens eine Verklebung, ist.

10. Kofferaufbau nach einem der Ansprüche 1 bis 9,
**dadurch gekennzeichnet, dass**
die Bodenstruktur (10) eine Reihe von wenigstens im Wesentlichen parallel zueinander angeordneten und voneinander beabstandeten Querträgern (50) aufweist und dass, vorzugsweise, die wenigstens eine Wand (4,5) und/oder das Bodenprofil (42) mit wenigstens einigen der Querträger (50) kraftschlüssig und/oder stoffschlüssig verbunden, insbesondere verschraubt, ist.

11. Kofferaufbau nach einem der Ansprüche 7 bis 10,
**dadurch gekennzeichnet, dass**
die wenigstens eine Wand (4,5), insbesondere von der Außenseite des Kofferaufbaus (2), mit den Stirnseiten von wenigstens einigen der Querträger (50) und/oder mit einer Außenseite eines Bodenprofils (42) verschraubt ist.

12. Kofferaufbau nach einem der Ansprüche 1 bis 11,
**dadurch gekennzeichnet, dass**
die wenigstens eine Wand (4,5) einschalig, insbesondere umfassend ein äußeres Wandpaneel (11,12) und innere wenigstens im Wesentlichen, senkrecht zur Oberseite des Ladebodens (9) sowie voneinander beabstandet angeordnete Ständerelemente (19,20), oder als zweischaliges Wandelement umfassend eine äußere Decklage, eine innere Decklage und eine zwischen der äußeren Decklage und der inneren Decklage angeordnete geschäumte Kernlage ausgebildet ist.

13. Kofferaufbau nach einem der Ansprüche 1 bis 12,
**dadurch gekennzeichnet, dass**
die wenigstens eine Wand (4,5) an ihrem unteren Rand (15) zwei über eine Falz (49,57) miteinander verbundene Blechlagen (47,48,54,55) aufweist und dass, vorzugsweise, eine Blechlage (47,54) vorzugsweise dem Wandelement (4,5) und eine Blechlage (48,55) der Bodenstruktur (10), insbesondere dem Bodenprofil (42), zugeordnet ist und dass, weiter vorzugsweise, die der Bodenstruktur (10), insbesondere dem Bodenprofil (42), zugeordnete Blechlage (48,55) mit der Bodenstruktur (10), insbesondere dem Bodenprofil (10), verbunden, insbesondere verschraubt und/oder verklebt, ist.

14. Verfahren zur Herstellung eines Kofferaufbaus (2) nach einem der Ansprüche 1 bis 13,
- bei dem der untere Rand (15) der wenigstens einen Wand (4,5) an den seitlichen Rand (37) der Bodenstruktur (10) herangeführt wird,
- bei dem der untere Rand (15) der wenigstens einen Wand (4,5) mit der Montageleiste (38) auf die Montageleiste (39) der Bodenstruktur (10) aufgesetzt wird,
- bei dem die Anlagefläche (40) der Montageleiste (38) der wenigstens einen Wand (4,5) entlang der Anlagefläche (41) der Montageleiste (39) der Bodenstruktur (10) schräg nach unten in Richtung der Bodenstruktur (10) abgleitet und
- bei dem die Montageleiste (38) der wenigstens einen Wand (4,5) mit der Montageleiste (39) der Bodenstruktur (10) verbunden, insbesondere verschraubt und/oder verklebt, werden.

15. Verfahren nach Anspruch 14,
- bei dem die Montageleisten (38,39) der wenigstens einen Wand (4,5) und der Bodenstruktur (10), insbesondere des Bodenprofils (42), vom Laderaum (8) des Kofferaufbaus (2) miteinander kraftschlüssig verbunden, insbesondere verschraubt werden und/oder
- bei dem die wenigstens eine Wand (4,5) und die Bodenstruktur (10), insbesondere das Bodenprofil (42), von der Außenseite des Kofferaufbaus (2) kraftschlüssig verbunden, insbesondere verschraubt, werden und/oder
- bei dem eine der Bodenstruktur (10) zugeordnete Blechlage (48,55) der wenigstens einen Wand (4,5) zunächst mit der Bodenstruktur (10) verbunden, insbesondere verschraubt, und nach dem Aufsetzen der wenigstens einen Wand (4,5) mit der Montageleiste (38) auf die Montageleiste (39) der Bodenstruktur (10) über eine Falzverbindung (49,57) mit einer der wenigstens einen Wand (4,5) zugeordneten Blechlage (47,54) verbunden wird.
